# FASCICULE DE BREVET EUROPEEN

(11) **EP 1 725 434 B1**
(45) Date de publication et mention de la délivrance du brevet: **14.05.2008**
(21) Numéro de dépôt: 05739592.3
(22) Date de dépôt: 16.03.2005
(51) Int. Cl.: B60R 9/06

(54) **ENGIN MOTORISE LEGER TOUT TERRAIN**
LEICHTER GELÄNDEWAGEN
ALL-TERRAIN LIGHT MOTOR VEHICLE

(30) Priorité: 18.03.2004 FR 0450543
(43) Date de publication de la demande: 29.11.2006
(73) Titulaire: S.Pace Moto, 64100 Bayonne (FR)
(72) Inventeur: LABADENS, Pierre, F-64990 Saint Pierre D'Irube (FR)
(74) Mandataire: Vannini, Torquato
(86) Numéro de dépôt international: PCT/FR2005/050167
(87) Numéro de publication internationale: WO 2005/092668

(56) Documents cités:
- WO-A-96/18526
- US-A- 5 433 357
- US-A1- 2002 070 255
- US-B1- 6 378 748
- US-B1- 6 439 444
- US-B1- 6 461 095
- US-B1- 6 533 339
- US-B1- 6 672 821

## Description

L'invention concerne un engin motorisé léger tout terrain.

L'invention s'applique aux engins entrant dans la catégorie des "quad" c'est-à-dire des quadricycles à moteur ou au matériel agricole automoteur ou similaire à quatre ou six roues dont au moins deux roues opposées sont motrices. Ces engins peuvent être équipés d'un volant ou d'un guidon, les occupants sont assis soit côte à côte, soit l'un derrière l'autre.

WO 96/18526 décrit un engin selon le préambule de la revendication 1.

A ce jour les « quad » existent soit en version uniquement tout terrain dite « non homologuée », soit en version mixte autorisée sur route et toujours tout terrain, cette dernière est dite « homologuée ».

De tels engins sont utilisés pour des manifestations de type loisir comme le Trial, le Raid ou professionnel en milieu agricole ou forestier.

Aucune autre application en dehors du contexte sport et loisir n'a été envisagée à ce jour.

Le déposant propose une nouvelle application pour engin motorisé léger tout terrain consistant à les utiliser comme engin de transport pour secourir des personnes en difficulté et/ou intervenir en milieu non accessible par les véhicules de secours habituels.

La présente invention propose un engin à moteur léger tout terrain permettant d'arriver rapidement sur le lieu d'un sinistre difficile d'accès comme les plages de mer ou de lacs, les forêts, la montagne en été ou en hiver y compris les zones enneigées, les zones de campagne, et de transporter une personne d'intervention : médecin, secouriste et/ ou une personne en difficulté : malade, blessée.

La présente invention a plus particulièrement pour objet un engin motorisé léger tout terrain selon la revendication 1.

Selon une autre caractéristique l'engin comporte un support de brancard fixé à l'arrière du siège du conducteur devant la nacelle.

La nacelle comporte un châssis qui est solidaire du cadre de l'engin.

La nacelle comporte en outre un ou plusieurs panneaux ou grilles de protection du passager.

La nacelle comprend un appui dos réglable monté sur une tige dorsale.

Le support de brancard comprend un châssis solidaire du porte paquet de l'engin ou du cadre de l'engin.

Le châssis support de brancard peut être télescopique, il comporte dans ce cas un châssis en deux parties dont une est amovible, escamotable de manière à conférer une position "route" et une position "transport de personne".

Le châssis support de brancard comporte des moyens de verrouillage de la partie amovible du châssis dans sa position transport de personne".

Le support de brancard comprend en outre des moyens de fixation de sangle pour le maintien d'une personne placé sur le brancard mis en place sur le porte brancard.

D'autres particularités et avantages de l'invention apparaîtront clairement à la lecture de la description qui est faite ci-après et qui est donnée à titre d'exemple illustratif et non limitatif et en regard des figures sur lesquelles :
- la figure 1 représente l'engin motorisé vu de côté selon un mode de réalisation de la présente invention,
- la figure 2 représente l'engin motorisé selon un autre mode de réalisation en position « route »,
- la figure 3 représente l'engin motorisé selon la figure 2, en position « transport de blessé »,
- la figure 4 représente une vue de dessus de l'engin selon la figure 3.

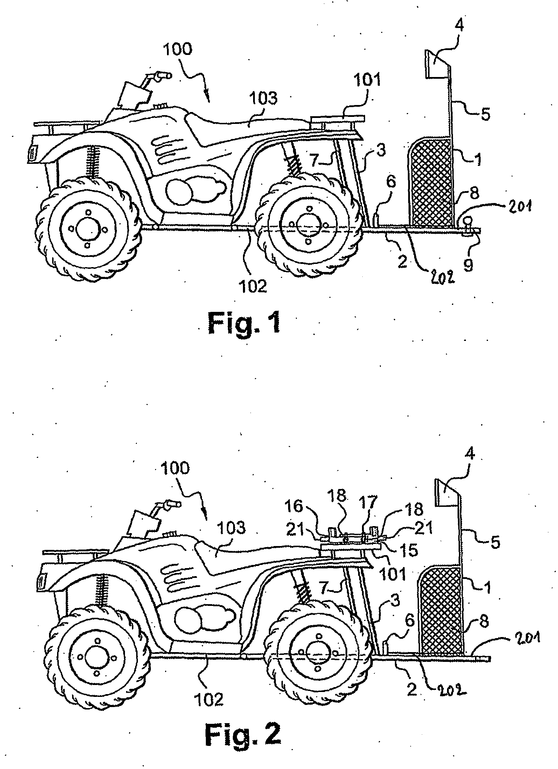

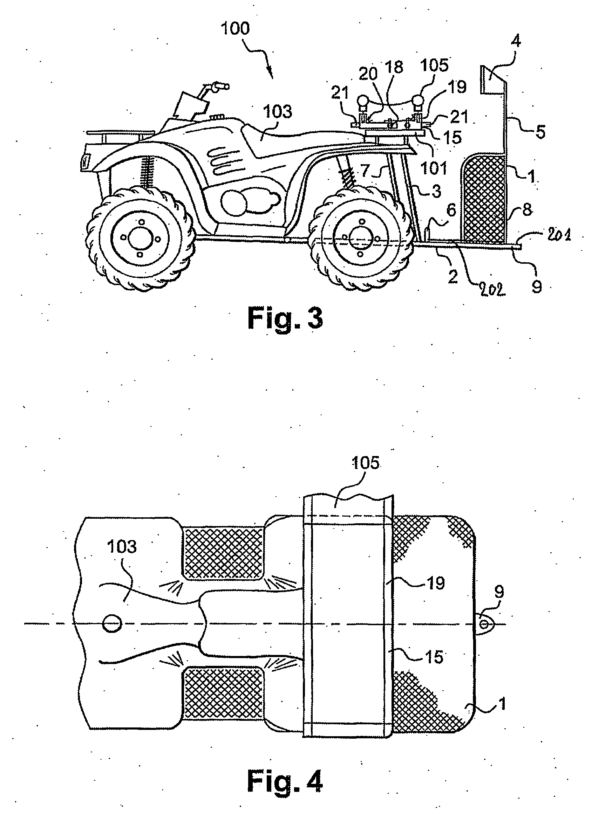

L'engin motorisé 100 représenté et donné à titre d'exemple sur les figures 1 à 4 est un quadricycle de type « quad ».

Sur la figure 1 on a représenté un premier mode de réalisation consistant à équiper l'engin à l'arrière, d'une nacelle 1 porte personne ou matériel. L'engin permet ainsi le transport rapide d'une personne/matériel sur tout terrain accidenté et/ou tout lieu non facile d'accès, la personne se tenant debout dans la nacelle.

La nacelle 1 comporte un châssis 2 fixé au cadre support 102 de l'engin. La nacelle est ainsi solidaire du « quad », le châssis 2 comporte avantageusement quatre points de fixation au cadre ou plus. La solidarisation de la nacelle peut être renforcée si besoin par des jambes de force 7.

La nacelle est solidaire du « quad » mais néanmoins démontable, la fixation étant prévue de manière à pouvoir être démontée.

De façon pratique le châssis 2 de la nacelle comporte au moins deux bras longitudinaux 201 perpendiculaires à l'axe des roues de l'engin. Ces bras 201 sont fixés au cadre 102 de l'engin 100.

Avantageusement le châssis de la nacelle 2 est fixé de manière démontable au cadre support 102.

La nacelle comporte en outre, porté par le châssis, un plateau ou grille support 202 et des panneaux ou grilles de protection 8 de part et d'autre de ce plateau 202

Un appui dos réglable 4 est porté par une barre dorsale 5. Un cale pieds 6 permet au secouriste de se stabiliser pendant le transport et d'avoir les mains libres.

Les grilles de protection 8 évitent toutes les projections dues à la rotation des roues et au déplacement de l'engin.

En outre les panneaux ou grilles latérales de protection 8 empêchent le secouriste de sortir ses jambes vers l'extérieur.

La barre dorsale 5 peut en outre servir de support à des outils ou appareils utiles à la mission en cours.

Le châssis 2 peut comporter à l'arrière de la nacelle un point d'accrochage 9 (boule ou chape) pour l'encrage éventuel d'une remorque légère dont le poids maximum est établi en fonction de la puissance du « quad ».

Sur la figure 2 on a représenté un deuxième mode de réalisation consistant à équiper l'engin motorisé 100, en outre, d'un support de brancard 15. Ce support de brancard 15 comprend un châssis fixé l'arrière du siège 103 du conducteur. Ce chassis 15 est fixé avantageusement sur le porte-bagages 101 de l'engin. Il pourrait également être fixé sur le cadre 102 de cet engin.

Ainsi l'engin 100 permet d'aller chercher et de transporter rapidement une personne placée sur un brancard (personne en difficulté blessée ou ayant eu un malaise), sur un terrain non accessible aisément pour tout autre véhicule.

Le support de brancard 15 peut être escamotable et comporter une position « transport blessé » et une position « route ».

Sur le trajet aller le support 15 est réglé sur la position « route » moins encombrante que la position « transport blessé ».

A cette fin le châssis 15 est en deux parties dont une partie mobile 16 est placée sur le châssis fixe 15 et peut coulisser sur ce dernier

Le châssis mobile 16 est guidé par le pion 17 et est verrouillé dans les positions extrêmes par des goupilles 18 situées à droite et à gauche des châssis.

Le brancard 105 soulevé par deux secouristes vient se loger dans les glissières 19 et les roues du brancard sont bloquées par les verrouillages situés aux extrémités 20 diagonalement opposées des rails.

Les sangles de maintien du blessé sur l'engin sont fixées au châssis 15 par des pontets 21 soudés de part et d'autre de ce châssis 15.

Bien entendu dans le cas de l'utilisation d'un « quad » ou autre engin assimilé comportant un emplacement arrière large, on pourra utiliser un châssis 15 non escamotable de façon à limiter les manoeuvres de mise en service pour la réception du brancard.

L'engin motorisé évite ainsi une dépense physique importante des secouristes avant l'intervention, leur laissant donc toutes leurs facultés d'analyse et l'économie d'un brancardage manuel, le tout permettant un gain de temps important pour la prise en charge d'un blessé et son arrivée plus rapide à des moyens médicaux plus importants.

Dans le cadre d'un soutien logistique, l'engin motorisé peut servir à aller chercher du personnel supplémentaire pour compléter le dispositif initial de secours (exemple : un médecin), de poste de surveillance mobile comme sur de vastes plages ou dans les massifs forestiers, l'observateur étant debout dans la nacelle pendant que le pilote se concentre sur la conduite.

Les pompiers peuvent transporter du matériel et dérouler des tuyaux depuis le « quad » en roulant sur des zones difficiles d'accès par leurs engins habituels.

Le pompier debout dans la nacelle effectue le déroulement de tuyaux transportés sur le porte-paquet 101 arrière du « quad », le pilote restant concentré sur la conduite. Dans ce cas, un châssis additionnel basculant frontal peut être prévu pour permettre de transporter une réserve supplémentaire de tuyaux.

Ainsi lorsque l'engin est équipé de tous les accessoires qui viennent d'être décrits, il offre la possibilité de pouvoir médicaliser le ou les blessés sur place grâce au matériel embarqué et de transporter un blessé sur un brancard lui-même bridé sur l'engin, un secouriste conduisant l'engin, l'autre debout dans la nacelle assurant la surveillance du blessé jusqu'à la zone de prise en charge par une unité plus équipée telle qu'une zone d'hélitreuillage ou la zone où se trouve une ambulance classique.

## Revendications

1. Engin motorisé léger tout terrain comprenant un cadre support (102), comportant en outre une nacelle (1) arrière portée par le cadre support (102) de l'engin, la nacelle (1) comprenant à cette fin un châssis (2) fixé audit cadre support (102), **caractérisé en ce que** ladite nacelle permet ainsi le transport d'une personne et/ou de matériel et comprend un appui dos (4) réglable monté sur une tige dorsale (5).

2. Engin motorisé léger tout terrain selon la revendication 1, **caractérisé en ce que** le châssis (2) de la nacelle (1) comporte au moins deux bras longitudinaux (201) perpendiculaires à l'axe des roues de l'engin, fixés au cadre (102) de l'engin.

3. Engin motorisé léger tout terrain selon la revendication 1 ou 2, **caractérisé en ce que** la nacelle (1) comporte, porté par son châssis (2) ledit châssis étant fixé de manière démontable au cadre support, un plateau ou grille support (202) et des panneaux ou grilles de protection (8) de part et d'autre de ce plateau (202).

4. Engin motorisé léger tout terrain selon la revendication 1, **caractérisé en ce qu'**il comporte un support de brancard (15) fixé à l'arrière du siège (103) du conducteur et devant la nacelle.

5. Engin motorisé léger tout terrain selon la revendication 4, l'engin comportant un porte paquet **caractérisé en ce que** le support de brancard (15) comprend un châssis solidaire du porte paquet (101) de l'engin.

6. Engin motorisé léger tout terrain selon la revendication 5, **caractérisé en ce que** le support de brancard (15) comprend un châssis solidaire du cadre de l'engin (102).

7. Engin motorisé léger tout terrain selon l'une quelconque des revendications 4 à 6, **caractérisé en ce que** le support de brancard (15) est télescopique, il comporte un châssis (15) en deux parties dont une est une partie (16) amovible escamotable de manière à conférer une position "route" et une position "transport de personne".

8. Engin motorisé léger tout terrain selon la revendication 7, **caractérisé en ce que** le support de brancard (15) comporte des moyens de verrouillage (18) de la partie amovible du châssis dans sa position transport de personne".

9. Engin motorisé léger tout terrain selon l'une quelconque des revendications 5 à 8, **caractérisé en ce que** le châssis (15) comprend des moyens de fixation (21) de sangle pour le maintien d'une personne placé sur le brancard (105) mis en place sur le porte brancard.

## Claims

1. All terrain light motor vehicle comprising a support frame (102), also comprising a rear platform (1) carried by the support frame (102) of the vehicle, the rear platform (1) for this purpose comprising a chassis (2) secured to said support frame (102), **characterized in that** said rear platform can therefore be used to transport a person and/or equipment and comprises an adjustable backrest (4) mounted on a dorsal rod (5).

2. All terrain light motor vehicle according to claim 1, **characterized in that** the chassis (2) of the rear platform (1) comprises at least two longitudinal arms (201) perpendicular to the axis of the vehicle wheels and secured to the vehicle frame (102).

3. All terrain light motor vehicle according to claim 1 or 2, **characterized in that** the rear platform (1), carried by its chassis (2) said chassis being removably secured to the support frame, carries a bed plate or supporting screen (202) and protective panels or screens (8) either side of this bed plate (202).

4. All terrain light motor vehicle according to claim 1, **characterized in that** comprises a stretcher carrier (15) fixed to the rear of the driver seat (103) and in front of the rear platform.

5. All terrain light motor vehicle according to claim 4, the vehicle comprising a pack holder, **characterized in that** the stretcher carrier (15) comprises an understructure secured to the pack holder (101) of the vehicle.

6. All terrain light motor vehicle according to claim 5, **characterized in that** the stretcher carrier (15) comprises an understructure secured to the vehicle frame (102).

7. All terrain light motor vehicle according to any of claims 4 to 6, **characterized in that** the stretcher carrier (15) is telescopic, it comprises an understructure (15) in two parts of which one is a retractable, removable part (16) so as to impart an "en route" position and a "person transport" position.

8. All terrain light motor vehicle according to claim 7, **characterized in that** the stretcher carrier (15) comprises locking means (18) to lock the removable part of the understructure in its "person transport" position.

9. All terrain light motor vehicle according to any of claims 5 to 8, **characterized in that** the stretcher understructure (15) comprises strap securing means (21) to secure a person lying on the stretcher (105) that is positioned on the stretcher carrier.

## Patentansprüche

1. Geländegängiges motorisiertes Leichtfahrzeug, einen Tragrahmen (102) umfassend, der weiterhin hinten eine Gondel (1) aufweist, die vom Tragrahmen (102) des Fahrzeugs getragen wird, wobei die Gondel (1) zu diesem Zweck ein am Tragrahmen (102) befestigtes Chassis (2) umfasst, **dadurch gekennzeichnet, dass** die Gondel damit den Transport einer Person und/oder von Material erlaubt und eine einstellbare Rückenlehne (4) umfasst, die an einer Rückenstange (5) montiert ist.

2. Geländegängiges motorisiertes Leichtfahrzeug nach Anspruch 1, **dadurch gekennzeichnet, dass** das Chassis (2) der Gondel (1) mindestens zwei längliche Arme (201) senkrecht zur Achse der Räder des Fahrzeugs aufweist, die am Rahmen (102) des Fahrzeugs befestigt ist.

3. Geländegängiges motorisiertes Leichtfahrzeug nach Anspruch 1 oder 2, **dadurch gekennzeichnet, dass** die Gondel (1), getragen von ihrem Chassis (2), wobei das Chassis demontierbar am Tragrahmen befestigt ist, eine Trägerplatte oder -gitter (202) und Schutzplatten oder -gitter (8) auf der einen und der anderen Seite dieser Platte (202) umfasst.

4. Geländegängiges motorisiertes Leichtfahrzeug nach Anspruch 1, **dadurch gekennzeichnet, dass** es eine hinter dem Sitz (103) des Kraftfahrers und vor der Gondel befestigte Tragestütze (15) umfasst.

5. Geländegängiges motorisiertes Leichtfahrzeug nach Anspruch 4, wobei das Fahrzeug einen Paketträger umfasst, **dadurch gekennzeichnet, dass** die Tragestütze (15) ein mit dem Paketträger (101) des Fahrzeugs verbundenes Chassis umfasst.

6. Geländegängiges motorisiertes Leichtfahrzeug nach Anspruch 5, **dadurch gekennzeichnet, dass** die Tragestütze (15) ein mit dem Fahrzeugrahmen (102) verbundenes Chassis umfasst.

7. Geländegängiges motorisiertes Leichtfahrzeug nach einem der Ansprüche 4 bis 6, **dadurch gekennzeichnet, dass** die Tragestütze (15) teleskopisch ist, sie ein zweiteiliges Chassis (15) umfasst, von dem ein Teil ein bewegbares klappbares Teil (16) in der Art ist, dass es eine Stellung "Fahrt" und eine Stellung "Personentransport" bereitstellt.

8. Geländegängiges motorisiertes Leichtfahrzeug nach Anspruch 7, **dadurch gekennzeichnet, dass** die Tragestütze (15) Verriegelungsmittel (18) des bewegbaren Teils des Chassis in seiner Stellung "Personentransport" umfasst.

9. Geländegängiges motorisiertes Leichtfahrzeug nach einem der Ansprüche 5 bis 8, **dadurch gekennzeichnet, dass** das Chassis (15) Gurt-Befestigungsmittel (21) zum Halten einer Person umfasst, die auf der Trage (105) platziert ist, die auf dem Trageträger platziert ist.
